(19) Europäisches Patentamt
European Patent Office
Office européen des brevets

(11) Veröffentlichungsnummer : **0 468 270 B1**

# (12) EUROPÄISCHE PATENTSCHRIFT

(45) Veröffentlichungstag der Patentschrift : **23.02.94 Patentblatt 94/08**

(51) Int. Cl.$^5$ : **C09D 5/00,** C09D 183/12

(21) Anmeldenummer : **91111380.1**

(22) Anmeldetag : **09.07.91**

## (54) Verwendung von mit Oxyalkylenethergruppen modifizierten Epoxypolysiloxanen als härtbare Beschichtungsmittel.

(30) Priorität : **21.07.90 DE 4023247**

(43) Veröffentlichungstag der Anmeldung : **29.01.92 Patentblatt 92/05**

(45) Bekanntmachung des Hinweises auf die Patenterteilung : **23.02.94 Patentblatt 94/08**

(84) Benannte Vertragsstaaten : **DE FR GB IT**

(56) Entgegenhaltungen :
**EP-B- 0 046 796**
**US-A- 4 313 988**

(73) Patentinhaber : **Th. Goldschmidt AG**
**Goldschmidtstrasse 100**
**D-45127 Essen (DE)**

(72) Erfinder : **Wewers, Dietmar, Dr.**
**Am Köllnischen Wald 6**
**W-4250 Bottrop (DE)**
Erfinder : **Weitemeyer, Christian, Dr.**
**Sundernholz 67**
**W-4300 Essen 1 (DE)**
Erfinder : **Jachmann, Jürgen**
**Berkelstrasse 22a**
**W-4690 Herne (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von härtbaren Organopolysiloxanen, welche neben Epoxygruppen Oxyalkylenethergruppen enthalten, als härtbare Beschichtungsmittel mit abhäsiven Eigenschaften.

Über härtbare Epoxysiloxane und deren Verwendung als Beschichtungsmittel mit abhäsiven Eigenschaften gibt es eine umfangreiche Patentliteratur. Aus der großen Anzahl von Patentschriften sei zunächst die US-PS 4 313 988 genannt. In dieser US-Patentschrift ist ein Produkt beschrieben, bestehend aus einem Trägerband mit einem druckempfindlichen Klebstoff, wobei auf einer Seite eine Lage eines normal klebenden und druckempfindlichen Klebstoffes vorgesehen ist und auf der anderen Oberfläche des Trägerbandes ein Material mit abhäsiven Eigenschaften angeordnet ist. Dieses Material besteht aus einem härtbaren Epoxypolysiloxan entweder in Lösung oder in 100 %iger Form, welches der Formel

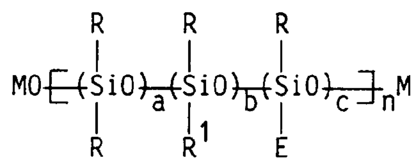

entspricht. In dieser Formel hat

- R die Bedeutung einer niederen Alkylgruppe mit 1 bis 3 Kohlenstoffatomen;
- $R^1$ ist ein einwertiger Kohlenwasserstoffrest mit 4 bis 20 Kohlenstoffatomen;
- E ist ein einwertiger Epoxygruppen enthaltender Kohlenwasserstoffrest;
- M ist eine Silylgruppe der Formel $R_3Si$-, $R_2R^1Si$- oder $R_2ESi$-, wobei R, $R^1$ und E wie vorstehend definiert sind;
- a hat einen Wert von 5 bis 200;
- b ist 0 oder hat einen Wert bis zu 20 % des Wertes von a und
- a+b ist 5 bis 200;
- c kann den Wert 0 annehmen, wenn M die Gruppe $R_2ESi$ ist, oder ist größer als 0, jedoch kleiner als 20 % des Wertes von a+b, wenn M die Gruppe $R_3Si$-, $R_2R^1Si$- oder $R_2ESi$- ist;
- n hat einen Wert von 1 bis 75;

dabei muß die Bedingung erfüllt sein, daß der einwertige Epoxy enthaltende Kohlenwasserstoffrest E mindestens eine polymerisierbare Epoxygruppe der Formel

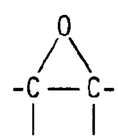

enthält, wobei der Rest der Gruppe E aus Kohlenstoff- und Wasserstoffatomen besteht und frei von acetylenischer Ungesättigtheit ist und wobei zusätzlich zu dem Oxiransauerstoff Ether, Carbonylsauerstoff oder die Gruppe

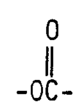

enthalten sein kann.

Die Zubereitung kann zusätzlich, bezogen auf Epoxypolysiloxan, bis zu 98 Gew.-% eines Epoxysilans enthalten.

In der vorgenannten US-PS 4 313 988 wird darauf hingewiesen, daß entsprechend dem Stand der Technik Überzüge mit abhäsiven Eigenschaften, also Trenneigenschaften, gegenüber Klebstoffen weit verwendet werden. Dimethylpolysiloxane ergeben Überzüge, von denen sich ein Klebeband mit der niedrigen Trennkraft von 4 bis 16 g/cm Bandbreite abziehen läßt. Dieses Maß gibt die Kraft an, die aufgewandt werden muß, um ein Klebeband der Breite 1 cm von der abhäsiv ausgerüsteten Oberfläche abzuziehen. Will man jedoch Klebebänder z.B. in Rollenform herstellen und abhäsiv ausrüsten, ist dieser Grad der Abhäsivität zu hoch, da es zu

Instabilitäten der gewickelten Rolle kommt. Für solche Zwecke sind Überzüge erwünscht, deren Trennkräfte gegenüber Klebebändern gezielt erhöht sind und beispielsweise 60 bis 350 g/cm, insbesondere etwa 60 bis 200 g/cm, betragen.

Die Epoxysiloxane enthalten wenigstens eine polymerisierbare Epoxygruppe der Formel

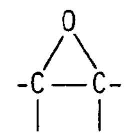

wobei die folgenden Gruppen als Beispiele genannt werden können:

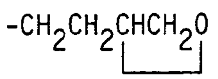 , 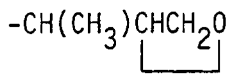 , 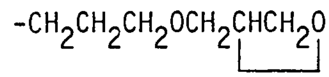 ,

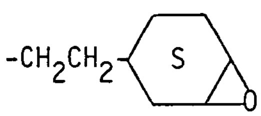 , 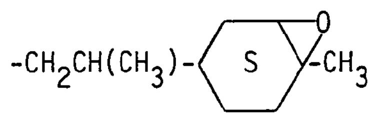 ,

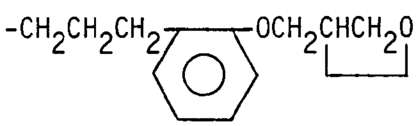

Die Epoxygruppen befinden sich vorzugsweise endständig am Kohlenwasserstoffrest.

Bevorzugte Epoxypolysiloxane der US-PS 4 313 988 sind solche der Formel

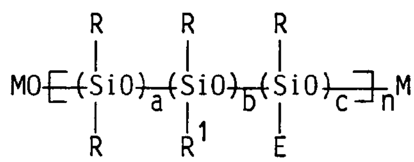

wobei R ein Methylrest ist, b einen Wert von 0 hat und die Gruppe E ein β-(3,4-Epoxycyclohexyl)ethyl- oder γ-Glycidoxypropylrest ist.

Die Härtung der Epoxypolysiloxane oder der Zubereitungen, die derartige Epoxypolysiloxane enthalten, erfolgt durch Zusatz und in Gegenwart von üblichen Epoxyhärtungskatalysatoren. Beispiele solcher Katalysatoren sind tertiäre Amine, Lewis-Säuren, wie z.B. $BF_3$, und deren Komplexe, wie z.B. mit Ethern oder Aminen, polyaromatische Iodonium- und Sulfoniumkomplexsalze, die als Anionen z.B. $SbF_6$- oder $BF_4$- Anionen enthalten. Man kann auch organische Säuren und deren Salze oder Derivate, wie z.B. perfluorierte Sulfonsäuren, als Härter verwenden.

Geeignete Härter sind auch in der US-PS 4 394 403 und der US-PS 4 310 469 beschrieben.

Es wird jedoch beim Zusatz der Härter sehr häufig beobachtet, daß, abhängig von der Struktur der Zubereitung, insbesondere der Siloxane, die Mischbarkeit und Löslichkeit der Photoinitiatoren (Härter) begrenzt ist. Man hat bereits epoxyfunktionelle Siloxane modifiziert, um deren Verträglichkeit mit Oniumsalz-Photoinitiatoren zu verbessern. So sind beispielsweise in der EP-A-0 334 068 epoxyfunktionelle Siloxane beschrieben, bei denen ein Teil der Epoxygruppen durch Umsetzung mit aromatischen Säuren, wie z.B. Benzoesäure, oder ungesättigten Säuren, wie z.B. Acrylsäure, verestert wurde. Hierdurch wird die Verträglichkeit der Epoxysiloxane mit den Härtungskatalysatoren erhöht, gleichzeitig jedoch der Gehalt an härtbaren Epoxygruppen erniedrigt. Epoxygruppen sind reaktive Gruppen. Sie können auch durch schwächere Säuren zur Polymerisation aktiviert werden. Dies macht eine kontrollierte Umsetzung äußerst schwierig. Im extremen Fall kann die Reaktion außer Kontrolle geraten und zur Vergelung führen. Des weiteren müssen Restgehalte

an Säure beseitigt werden, um eine Lagerstabilität zu gewährleisten.

Aus der EP-A-0 343 304 ist ein Putz- und Wischtuch (wiper) bekannt, welches ein Netzmittel enthält, das dem Tuch dauerhafte Hydrophilie verleiht. Ein solches Netzmittel kann eine Organosiliciumverbindung der Formel $MD_xD'_yD''_zM$ sein.

In dieser Formel bedeutet M jeweils eine endbegrenzende Gruppe der Formel $A_3SiO_{1/2}$, wobei A ein einwertiger organischer Rest ist, welcher frei von olefinischen Doppelbindungen oder Hydroxylgruppen und direkt an das Si-Atom gebunden ist. M kann auch ein Alkoxyrest mit 1 bis 13 Kohlenstoffatomen sein.

D ist eine Einheit der Formel $R_2SiO$, wobei R ein einwertiger Kohlenwasserstoffrest ist und keine C≡C-Bindungen aufweisen darf.

D' ist eine Einheit der Formel RR'SiO, wobei R wiederum ein einwertiger Kohlenwasserstoffrest ist, welcher keine C≡C-Bindungen aufweisen darf. R' ist eine Polyoxyalkyleneinheit der Formel

$$C_nH_{2n}(OC_2H_4)_a(OC_3H_6)_bOR''$$

wobei R" ein Wasserstoffrest, ein Acylrest mit 1 bis 8 Kohlenstoffatomen oder ein einwertiger Kohlenwasserstoffrest mit 1 bis 13 Kohlenstoffatomen ist. n ist eine ganze Zahl mit einem Durchschnittswert von 1 bis 8. a und b sind ganze Zahlen, deren Summe einen Wert von 5 bis 200 hat und wobei das Produkt a/(a+b) einen Wert von 1,0 bis 0 hat.

D" ist eine Einheit der Formel RR"'SiO, wobei R ein einwertiger Kohlenwasserstoffrest frei von C≡C-Bindungen ist. R"' ist ein einwertiger organischer Rest, welcher wenigstens eine vicinale Epoxygruppe aufweist.

x ist eine ganze Zahl mit einem durchschnittlichen Wert von 10 bis 5000. y ist eine ganze Zahl mit einem durchschnittlichen Wert von 1 bis x, und z ist eine ganze Zahl mit einem durchschnittlichen Wert von 1 bis 0,5x, mit der Maßgabe, daß die Summe y + z nicht größer als 0,75x ist.

Die modifizierten Silicone, welche in der EP-A-0 343 304 beschrieben sind, werden als hydrophilierende Netzmittel verwendet. Ihre Verwendbarkeit zur Herstellung härtbarer Beschichtungsmittel mit abhäsiven Eigenschaften ist dieser Veröffentlichung nicht zu entnehmen.

Der vorliegenden Erfindung liegt die Aufgabe zugrunde, härtbare Epoxygruppen aufweisende Organopolysiloxane aufzufinden und bereitzustellen, welche eine gute Verträglichkeit gegenüber Photoinitiatoren aufweisen, ohne die oben erwähnten Nachteile aufzuweisen. Es wird außerdem angestrebt, durch die Modifizierung der Epoxysiloxane deren Haftung auf dem Untergrund zu verbessern und gleichzeitig die Möglichkeit zu geben, die Release-Eigenschaften entsprechend dem Anwendungszweck zu modifizieren, d.h. auf den Anwendungszweck einzustellen.

Es wurde nun gefunden, daß in bestimmter Weise aufgebaute und modifizierte Epoxygruppen aufweisende Organopolysiloxane diese Forderungen erfüllen.

Gegenstand der vorliegenden Erfindung ist die Verwendung von härtbaren Organopolysiloxanen mit Epoxygruppen, welche zusätzlich mindestens eine an ein Si-Atom des Polysiloxans gebundene Gruppe der allgemeinen Formel

$$[-O-((C_nH_{2n}O-)_x)_y]_zR^3-O-((C_nH_{2n}O-)_x)_yH \qquad I$$

aufweisen, wobei

- $R^3$ ein zweiwertiger Alkylenrest mit 2 bis 11 Kohlenstoffatomen,
- z 0 oder 1,
- y 0 oder 1,
- z+y 1 oder 2 ist,
- n im durchschnittlichen Molekül einen mittleren Wert von 2 bis 3 hat, wobei die Absolutwerte von n 2, 3 oder 4 betragen, und
- x einen Wert von 1 bis 200 hat,

alleine oder in Mischung mit härtbaren Verbindungen, welche Epoxygruppen aufweisen, insbesondere Epoxygruppen enthaltenden Organopolysiloxanen, welche jedoch frei von der vorgenannten Gruppe sind, als härtbare Beschichtungsmittel mit abhäsiven Eigenschaften.

Beispiele für Reste $R^3$ sind die Reste $-CH_2CH_2-$, $-CH_2CH_2CH_2-$,

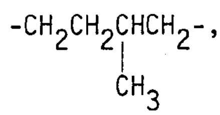

$-(CH_2)_{11}-$.

Der Rest $R^3$ kann direkt mit einem Siliciumatom des Organopolysiloxans verbunden sein. In diesem Falle ist z = 0. Hat z den Wert 1 und ist y = 0, ist der Rest $R^3$ über ein Sauerstoffatom mit einem Siliciumatom des

Organopolysiloxans verbunden.

n hat Absolutwerte von 2, 3 oder 4. Es liegen somit Ethylenoxy-, Propylenoxy-, Butylenoxyeinheiten vor. Im durchschnittlichen Molekül ist jedoch der mittlere Wert von n 2 bis 3, insbesondere 2 bis 2,6.

Die Anzahl der Oxyalkyleneinheiten ergibt sich aus dem Index x, welcher einen Wert von 1 bis 200, vorzugsweise einen Wert von 1 bis 100 und insbesondere einen Wert von 5 bis 50 hat.

Es ist von besonderer Bedeutung, daß die vorstehend genannte modifizierende Gruppe endständig eine OH-Gruppe aufweist. Diese OH-Gruppe kann bei der Aushärtung mit den Epoxygruppen reagieren.

Durch die Einführung der oben beschriebenen modifizierenden Gruppe der Formel I wird die Verträglichkeit der modifizierten Siloxane gegenüber Photoinitiatoren verbessert. Die Haftung des Epoxysiloxans auf dem Untergrund wird verbessert. Durch Variation der Indices n, x und y können außerdem die Trennkräfte des ausgehärteten Epoxysiloxans beeinflußt werden. Dabei werden die Trennkräfte im allgemeinen erhöht, wenn y = 1, x hohe und n niedrige Werte annimmt.

Erfindungsgemäß werden besonders bevorzugt oxyalkylenmodifizierte Epoxygruppen aufweisende Organopolysiloxane verwendet, die der folgenden allgemeinen durchschnittlichen Formel entsprechen

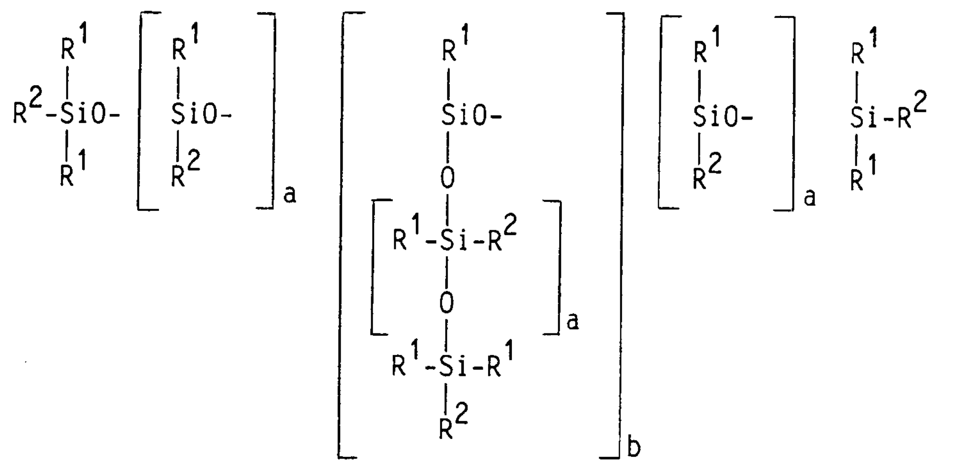

II

$R^1$ kann im Polysiloxanmolekül gleich oder verschieden sein und Alkylreste mit 1 bis 4 Kohlenstoffatomen bedeuten. Beispiele solcher Reste sind der Methyl-, Ethyl-, Propyl- oder Butylrest. Mindestens 90 % der Reste $R^1$ und besonders bevorzugt 100 % der Reste $R^1$ sind Methylreste.

$R^2$ kann jeweils ein Alkylrest mit 1 bis 20 Kohlenstoffatomen, ein Aryl- oder Aralkylrest sein. Beispiele für Alkylreste sind der Methyl-, Ethyl-, Propyl-, Butyl-, Hexyl-, Decyl-, Dodecyl-, Hexadecyl- oder Octadecylrest; als Arylrest kommt insbesondere der Phenylrest und als Aralkylrest der Benzylrest in Frage.

Der Rest $R^2$ kann auch die Bedeutung eines Epoxyrestes haben, wobei der Epoxyrest über eine Si-C-Bindung mit einem Si-Atom des Polysiloxans verknüpft ist. Beispiele solcher Epoxyreste sind bereits in der Beschreibung zum Stand der Technik genannt.

Der Rest $R^2$ kann ferner der Formel I entsprechen, wobei der Rest $R^3$ die oben angegebene Bedeutung hat und die Indices n, x, y und z die bereits angegebenen Werte aufweisen.

Der Index a gibt die Anzahl der kettenbildenden difunktionellen Siloxyeinheiten an und hat einen Wert von 1 bis 1000, vorzugsweise von 5 bis 200. b gibt die Anzahl der trifunktionellen verzweigenden Siloxyeinheiten an. b hat einen Wert von 0 bis 10, vorzugsweise von 0 bis 2.

Beispiele erfindungsgemäß zu verwendender, Epoxygruppen aufweisender, modifizierter Organopolysiloxane sind in den Formeln wiedergegeben:

Verbindung 1

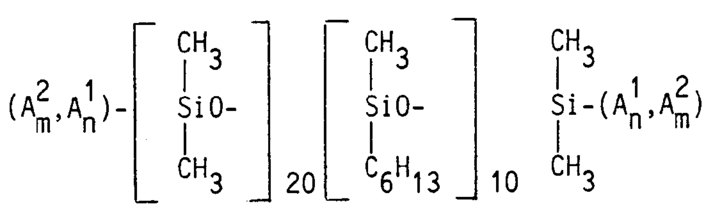

$A^1$ =

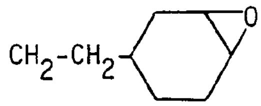

$A^2$ = $(CH_2)_3$-$O(C_2H_4O)_8$-H
n = 0,5
m = 0,5

Verbindung 2

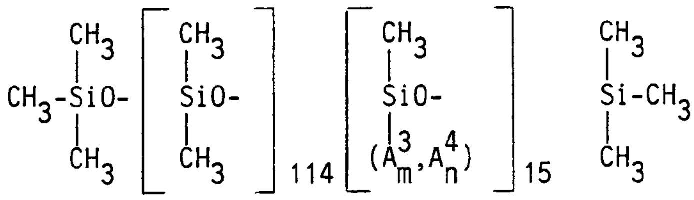

$A^3$ =

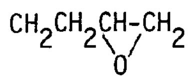

$A^4$ = -$O(C_2H_4O)_2H$
m = 0,7
n = 0,3

Verbindung 3

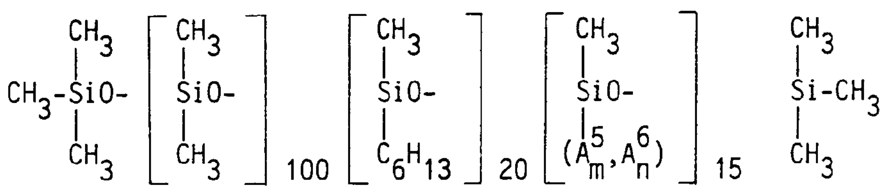

$A^5$ =

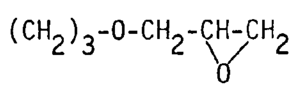

$A^6$ = -$O(C_2H_4O)_{10}$-$C_4H_8$-$O(C_2H_4O)_{10}$-H
m = 0,7
n = 0,3

Verbindung 4

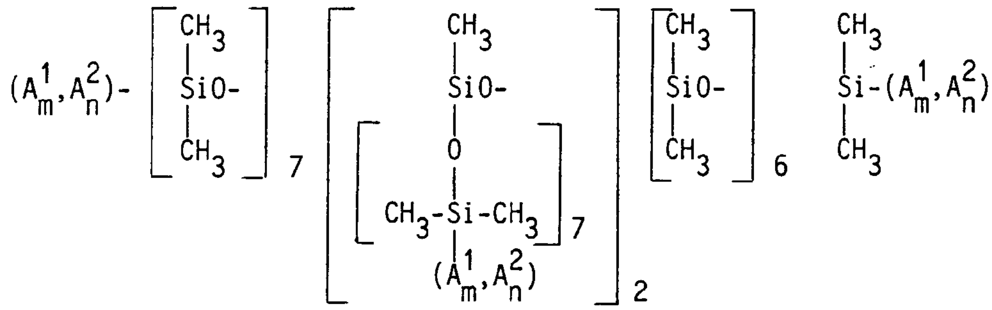

$A^1$, $A^2$ wie in Verbindung 1 definiert
m = 0,75
n = 0,25

Verbindung 5

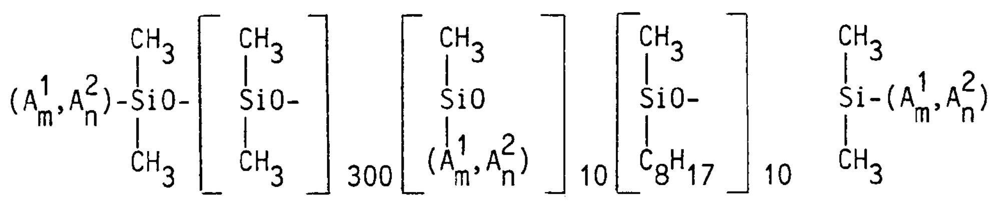

$A^1$, $A^2$ wie in Verbindung 1 definiert
m = 0,8
n = 0,2

Verbindung 6

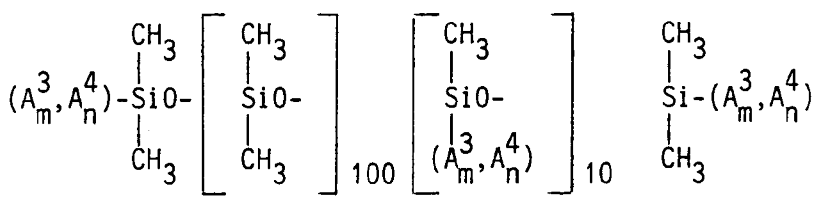

$A^3$, $A^4$ wie in Verbindung 2 definiert
m = 0,8
n = 0,2

In der letzten europäischen Patentanmeldung EP-A-0 391 162 A2 wird eine photopolymerisierbare Zubereitung zum Beschichten beansprucht, die als Komponente (A) ein epoxyfunktionelles Diorganopolysiloxan der allgemeinen Formel

$$R_2R'SiO(RR'SiO)_xSiR_2R'$$

enthält, wobei

R eine Alkylgruppe mit 1 bis 8 C-Atomen,
R' = R oder ein einwertiger, epoxyfunktioneller organischer Rest mit 2 bis 20 C-Atomen ist, mit der Maßgabe, daß wenigstens 2 Reste R' einwertige, epoxyfunktionelle organische Reste sind und
x einen Wert von 0 bis 20 hat.

Im Gegensatz zu den Verbindungen der europäischen Patentanmeldung EP-A-0 391 162 A2 enthalten die erfindungsgemäß zu verwendenden Epoxygruppen zusätzlich mindestens eine an ein Si-Atom des Polysiloxans gebundene Gruppe der allgemeinen Formel

$$[-O-((C_nH_{2n}O-)_x)_y]_zR^3-O-((C_nH_{2n}O-)_x)_yH$$

Diese Gruppe beeinflußt unmittelbar die Verträglichkeit des Epoxysiloxans mit Photoinitiatoren, verbessert die Haftung der ausgehärteten Siloxane auf dem Untergrund und deren Abhäsivität.

Die erfindungsgemäß zu verwendenden Organopolysiloxane können insbesondere als Überzüge benutzt werden, die gegenüber Haftklebern von Etiketten, dekorativen Laminaten, Transferpapieren und Transferbändern Trennwirkung entfalten. Sie können außerdem zur Herstellung von nicht klebenden Verpackungsmaterialien für Nahrungsmittel und als industrielle Verpackungsmittel eingesetzt werden. Dabei dienen als Trägerbahnen für die abhäsiven Beschichtungen insbesondere Papierbahnen oder Folien aus Polyethylen, Polypropylen oder Polyestern.

Die erfindungsgemäß zu verwendenden Organopolysiloxane können mit Vorteil zur Herstellung von Druckfarben und dekorativen Überzügen eingesetzt werden.

Ein weiterer bevorzugter Verwendungszweck der erfindungsgemäß zu verwendenden Organopolysiloxane besteht darin, daß man sie allein oder in Mischung mit anderen härtbaren Verbindungen als Vergußmassen einsetzt. Diese Vergußmassen werden insbesondere für elektrische oder elektronische Bauteile, wie bestückte Platinen, Schaltelemente, Stecker und dgl. verwendet, welche dem Einfluß von aggressiven Medien, Feuchtigkeit und dgl. ausgesetzt sind.

Man kann die erfindungsgemäß zu verwendenden Verbindungen oder deren Abmischungen auch zum Beschichten von Glasfasern verwenden, die insbesondere zur Herstellung von Lichtwellenleitern bestimmt sind. Durch die Beschichtung werden die Glasfasern vor Beschädigungen und schädigenden äußeren Einflüssen bewahrt, und gleichzeitig wird die Reflexion der Glasfasern durch das Beschichtungsmittel beeinflußt.

Die erfindungsgemäß zu verwendenden, härtbare Epoxygruppen aufweisenden, modifizierten Organopolysiloxane können für sich allein nach Zusatz von üblichen Photoinitiatoren, die in einer Menge von 0,01 bis 7 Gew.-%, bezogen auf Organopolysiloxan, zugesetzt werden, als härtbare Beschichtungsmittel eingesetzt werden. Dabei können diese Zubereitungen gegebenenfalls zum Zweck des besseren Auftragens Lösungsmittel enthalten. Bevorzugt sind jedoch lösungsmittelfreie Zubereitungen. Man kann die erfindungsgemäß zu verwendenden Organopolysiloxane jedoch auch üblichen, Epoxygruppen enthaltenden Organopolysiloxanen des Standes der Technik zusetzen, um deren Eigenschaften bei der gemeinsamen Aushärtung zu beeinflussen und zu modifizieren.

In den folgenden Beispielen wird zunächst die Herstellung der erfindungsgemäß zu verwendenden, härtbare Epoxygruppen aufweisenden, modifizierten Organopolysiloxane beschrieben, und in den nachfolgenden anwendungstechnischen Vergleichsversuchen werden die Eigenschaften der erfindungsgemäß zu verwendenden Organopolysiloxane mit solchen des Standes der Technik verglichen.

Beispiel 1

Zu einer Mischung von 496 g (4,0 Mol) Vinylcyclohexenoxid, 1071 g (2,6 Mol) Allylpolyether und 16 mg $H_2PtCl_6 \cdot 6\,H_2O$ werden bei 120°C 1942 g (1 Mol) eines Si-H-Gruppen enthaltenden Polydimethylsiloxans zugetropft. Nach Beendigung des Zutropfens wird noch 8 h bei 130°C gerührt. Nach Filtration und Abziehen der flüchtigen Reaktionsprodukte bei 120°C/0,1 mbar werden 3164 g (94 % der Theorie) eines mittelviskosen Öls erhalten, dem laut $^1H$-NMR-Spektrum die allgemeine Formel

$$(CH_3)_3Si-\left[\begin{array}{c} CH_3 \\ | \\ OSi- \\ | \\ CH_3 \end{array}\right]_{20}\left[\begin{array}{c} CH_3 \\ | \\ OSi- \\ | \\ (A^1_n,A^2_m) \end{array}\right]_{5} OSi(CH_3)_3$$

$A^1$, $A^2$ wie in Verbindung 1 definiert
n = 0,6
m = 0,4
zukommt.

Beispiel 2

Analog zu Beispiel 1 wird aus 376 g (3,3 Mol) Allylglycidether, 1359 g (3,3 Mol) Allylpolyether und 2330 g (1,2 Mol) Si-H-Gruppen enthaltenden Polydimethylsiloxans ein Polydimethylsiloxan der allgemeinen Formel

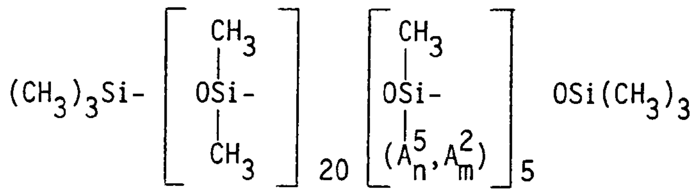

$A^5$ wie in Verbindung 3 definiert
$A^2$ wie in Verbindung 1 definiert
n = 0,5
m = 0,5
erhalten.

Beispiel 3

Analog zu Beispiel 1 wird aus 50 g (0,4 Mol) Vinylcyclohexenoxid, 107 g (0,26 Mol) Allylpolyether und 1159 g (0,1 Mol) eines Si-H-Gruppen enthaltenden Polydimethylsiloxans ein Polydimethylsiloxan der durchschnittlichen Formel

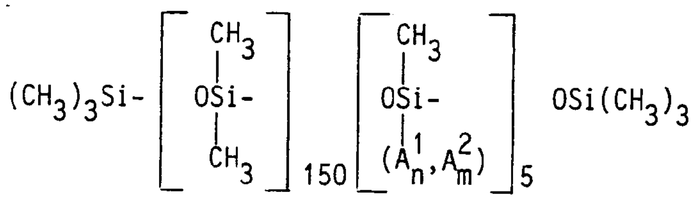

$A^1$, $A^2$ wie in Verbindung 1 definiert
n = 0,6
m = 0,4
erhalten.

Beispiel 4

Analog zu Beispiel 1 wird aus 136 g (1,1 Mol) Vinylcyclohexenoxid, 453 g (1,1 Mol) Allylpolyether und 2980 g (1 Mol) eines Si-H-Gruppen enthaltenden Organopolysiloxans ein Organopolysiloxan der mittleren Formel

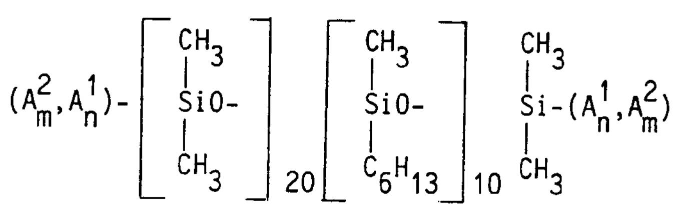

$A^1$, $A^2$ wie in Verbindung 1 definiert
n = 0,5
m = 0,5
erhalten.

Beispiel 5

Zu einer Menge von 950 g (0,1 Mol) eines Si-H-Gruppen enthaltenden Polydimethylsiloxans werden 16 mg $H_2PtCl_6 \cdot 6\ H_2O$ bei 120°C zugegeben und 32 g (0,45 Mol) Butadienmonoepoxid zugetropft. Nach 5 h bei 120°C werden 2 g CsF zugegeben und 150 g (1,05 Mol) Diethylenglycol zugetropft und 15 h bei dieser Temperatur gerührt, bis keine $H_2$-Entwicklung mehr festzustellen ist. Danach wird filtriert und flüchtige Bestandteile bei 120°C/0,1 mbar entfernt. Ausbeute 1020 g.

$^1$H-NMR-spektroskopisch hat das mittelviskose Öl die durchschnittliche Formel

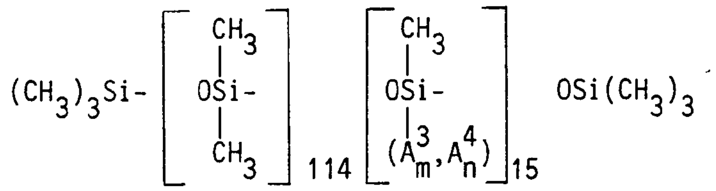

$A^3$, $A^4$ wie in Verbindung 2 definiert
m = 0,7
n = 0,3

Beispiel 6

Analog zu Beispiel 5 wird aus 120 g (1,05 Mol) Allylglycidether, 437 g (0,45 Mol) eines Polyethers und 1134 g (0,1 Mol) eines Si-H-Gruppen enthaltenden Organopolysiloxans ein Organopolysiloxan der durchschnittlichen Formel

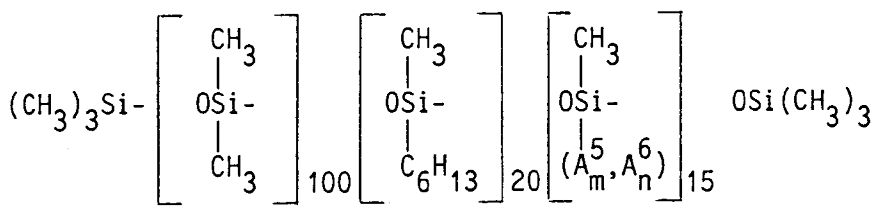

$A^5$, $A^6$ wie in Verbindung 3 definiert,
m = 0,7
n = 0,3
erhalten.

Beispiel 7

Analog zu Beispiel 1 wird aus 41 g (0,33 Mol) Vinylcyclohexenoxid, 46,3 g (0,11 Mol) Allylpolyether und 219 g (0,1 Mol) eines Si-H-Gruppen enthaltenden Polydimethylsiloxans ein Polydimethylsiloxan der mittleren Formel

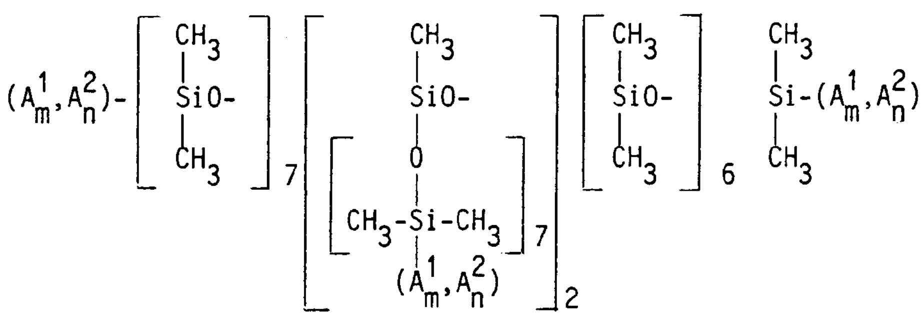

$A^1$, $A^2$ wie in Verbindung 1 definiert
m = 0,75
n = 0,25
erhalten.

Beispiel 8

Analog zu Beispiel 1 wird aus 130 g (1,0 Mol) Vinylcyclohexenoxid, 110 g (0,3 Mol) Allylpolyether und 2465 g (0,1 Mol) eines Si-H-Gruppen enthaltenden Organopolysiloxans ein Organopolysiloxan der durchschnittlichen Formel

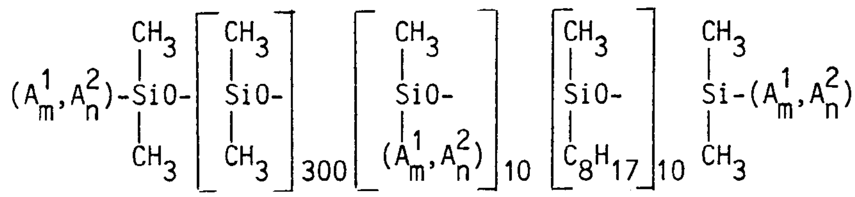

$A^1$, $A^2$ wie in Verbindung 1 definiert,
m = 0,8
n = 0,2
erhalten.

Beispiel 9

Analog zu Beispiel 5 wird aus 70 g (1 Mol) Butadienmonoepoxid, 34 g Diethylenglycol und 813 g eines Si-H-Gruppen enthaltenden Polydimethylsiloxans ein Organopolysiloxan der allgemeinen Formel

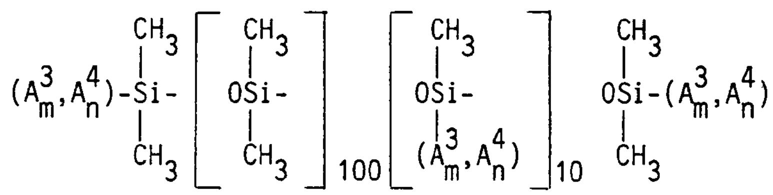

$A^3$, $A^4$ wie in Verbindung 2 definiert,
m = 0,8
n = 0,2
erhalten.

Versuchsbeispiele 1 bis 3 (nicht erfindungsgemäß)

Analog zu Beispiel 1 werden aus Vinylcyclohexenoxid und Si-H-Gruppen enthaltenden Polydimethylsiloxanen Organopolysiloxane folgender durchschnittlicher Formeln hergestellt.

Versuchsbeispiel 1

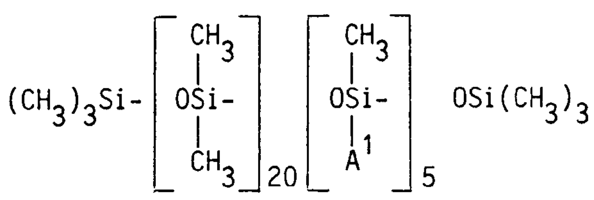

Versuchsbeispiel 2

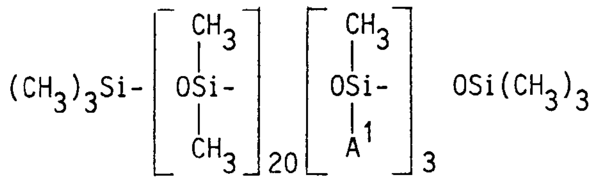

Versuchsbeispiel 3

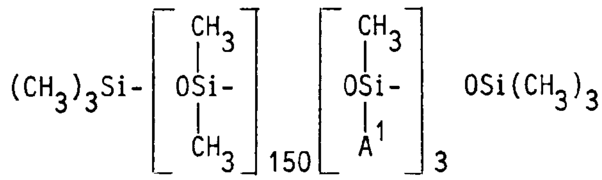

Anwendungstechnische Prüfungen

Zur Überprüfung der anwendungstechnischen Eigenschaften der erfindungsgemäß modifizierten Polysiloxane werden die Verbindungen 1 bis 9 mit 1 Gew.-% Bis(dodecylphenyl)iodoniumhexafluoroantimonat versetzt, auf eine orientierte Polypropylenfolie aufgetragen und mit einer Fusion UV-Lampe (120 W/cm) gehärtet. Die Auftragsmenge beträgt in jedem Falle ca. 1,1 $g/cm^2$. Für die Vergleichsbeispiele werden verschiedene, 80 mm breite Klebebänder verwendet, und zwar mit Acrylatklebern beschichtete Klebebänder, die im Handel unter der Bezeichnung Tesa®154 und Tesa®970 erhältlich sind, sowie ein mit Kautschukkleber beschichtetes Klebeband, welches im Handel unter der Bezeichnung Tesa®969 erhältlich ist.

Zur Messung der Abhäsivität werden diese Klebebänder auf den Untergrund aufgewalzt und anschließend im Falle der Acrylatklebebänder bei 70°C und im Falle des Kautschukklebebandes bei 40°C gelagert. Nach 24 Stunden wird die Kraft gemessen, die benötigt wird, um das jeweilige Klebeband unter einem Schälwinkel von 180° vom Untergrund abzuziehen. Diese Kraft wird als Trennkraft bezeichnet. Außerdem erfolgt eine Prüfung der Adhäsion der modifizierten Polysiloxane auf dem Substrat durch kräftiges Reiben mit dem Daumen. Bei mangelnder Haftung bilden sich gummiartige Krümel (sogenannter "Rub off" Test).

Tabelle

| | Modifiziertes Siloxan | | | | Orientierte Polypropylenfolie | | | | | | |
|---|---|---|---|---|---|---|---|---|---|---|---|
| Beispiel | Kettenlänge | Epoxy-Funktionalität | OH-Funktionalität | Alkyl-Rest | Tesa® 154 Trennkraft [N] | Tesa® 970 | Tesa® 969 | Löslichkeit Photoinitiator | Rub Off | Härtung | Oberfläche ölig/schmierig |
| 1 | 27 | 3 | 2 | ./. | 3,7 | 4,1 | 3,9 | sehr gut | nein | ja | nein |
| 2 | 27 | 2,5 | 2,5 | ./. | 2,4 | 2,7 | 2,7 | sehr gut | nein | ja | nein |
| 3 | 157 | 3 | 2 | ./. | 0,8 | 0,89 | 0,87 | gut | nein | ja | nein |
| 4 | 31 | 1 | 1 | $C_6H_{13}$ | 2,0 | 2,3 | 2,1 | sehr gut | nein | ja | nein |
| 5 | 131 | 10,5 | 4,5 | ./. | 0,85 | 0,9 | 0,92 | gut | nein | ja | nein |
| 6 | 137 | 10,5 | 4,5 | $C_6H_{13}$ | 1,2 | 1,3 | 1,5 | gut | nein | ja | nein |
| 7 | ./. | 3 | 1 | ./. | 3,4 | 4,0 | 6,7 | sehr gut | nein | ja | nein |
| 8 | 322 | 9,6 | 2,4 | $C_8H_{17}$ | 0,1 | 0,15 | 0,12 | mäßig | nein | ja | nein |
| 9 | 112 | 9,6 | 2,4 | ./. | 1,0 | 0,9 | 0,9 | gut | nein | ja | nein |
| Versuchsbeispiel | | | | | | | | | | | |
| 1 | 27 | 5 | 0 | ./. | 1,9 | 2,2 | 2,2 | mäßig | ./. | ja | nein |
| 2 | 25 | 3 | 0 | ./. | ./. | ./. | ./. | schlecht | ./. | nein | ja |
| 3 | 155 | 3 | 0 | ./. | ./. | ./. | ./. | sehr schlecht | ./. | nein | ja |

Aus der Tabelle ergibt sich, daß die erfindungsgemäß modifizierten Organopolysiloxane die gewünschten anwendungstechnischen Eigenschaften aufweisen. Sie zeigen eine gute Haftung auf dem Träger, lassen sich

schnell aushärten, zeigen gute abhäsive Eigenschaften gegenüber chemisch verschiedenartig aufgebauten Klebern, lassen sich im Gegensatz zum Stand der Technik durch eine geeignete Wahl der Substituenten bei gleichem Siloxangerüst auf den chemischen Charakter des Klebstoffes einstellen und zeigen eine gute Verträglichkeit gegenüber Photoinitiatoren. Besonders auffallend ist, daß die erfindungsgemäß modifizierten Organopolysiloxane, bedingt durch den Synergismus von Epoxy-Rest und $R^3$-OH-Rest, bei einer geringeren Epoxy-Funktionalität noch anstandslos härten.

## Patentansprüche

1. Verwendung von härtbaren Organopolysiloxanen mit Epoxygruppen, welche zusätzlich mindestens eine an ein Si-Atom des Polysiloxans gebundene Gruppe der allgemeinen Formel

$$[-O-((C_nH_{2n}O-)_x)_y]_zR^3-O-((C_nH_{2n}O-)_x)_yH$$

aufweisen, wobei

- $R^3$ ein zweiwertiger Alkylenrest mit 2 bis 11 Kohlenstoffatomen,
- z 0 oder 1,
- y 0 oder 1,
- z+y 1 oder 2 ist,
- n im durchschnittlichen Molekül einen mittleren Wert von 2 bis 3 hat, wobei die Absolutwerte von n 2, 3 oder 4 betragen, und
- x einen Wert von 1 bis 200 hat,

alleine oder in Mischung mit härtbaren Verbindungen, welche Epoxygruppen aufweisen, insbesondere Epoxygruppen enthaltenden Organopolysiloxanen, welche jedoch frei von der vorgenannten Gruppe sind, als härtbare Beschichtungsmittel mit abhäsiven Eigenschaften.

2. Verwendung nach Anspruch 1, dadurch gekennzeichnet, daß das oxyalkylenmodifizierte Epoxygruppen aufweisende Organopolysiloxan der allgemeinen durchschnittlichen Formel

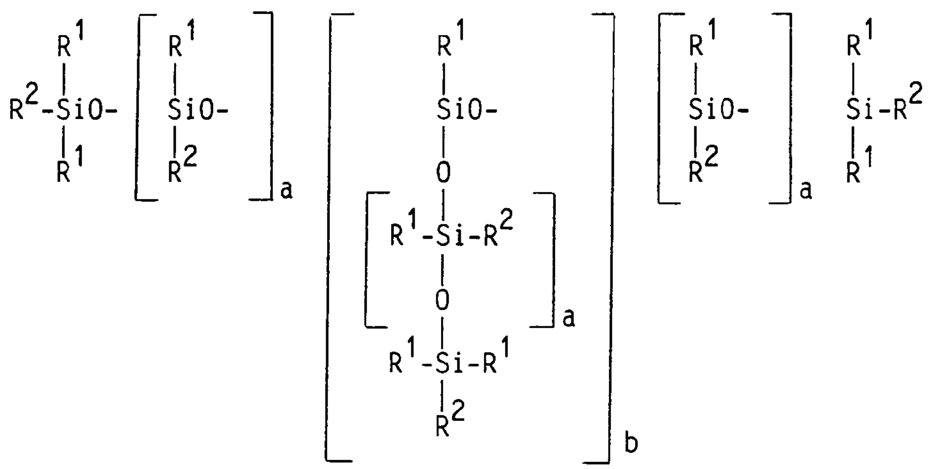

entspricht, wobei

- $R^1$ im Molekül gleich oder verschieden ist und Alkylreste mit 1 bis 4 Kohlenstoffatomen bedeutet, jedoch mindestens 90 % der Reste $R^1$ Methylreste sind,
- $R^2$ folgende Bedeutung hat:
  - a) Alkylreste mit 1 bis 20 Kohlenstoffatomen, Aryl- oder Aralkylreste,
  - b) Epoxyreste, die über Si-C-Bindungen mit Si-Atomen des Polysiloxans verknüpft sind,
  - c) Reste der allgemeinen Formel

$$[-O-((C_nH_{2n}O-)_x)_y]_zR^3-O-((C_nH_{2n}O-)_x)_yH$$

wobei

- $R^3$ ein zweiwertiger Alkylenrest mit 2 bis 11 Kohlenstoffatomen,
- z 0 oder 1,
- y 0 oder 1,
- z+y 1 oder 2 ist,
- n im durchschnittlichen Molekül einen mittleren Wert von 2 bis 3 hat, wobei die Absolutwerte

von n 2, 3 oder 4 betragen, und

x einen Wert von 1 bis 200 hat,

a einen Wert von 1 bis 1000 und

b einen Wert von 0 bis 10 hat,

mit der Maßgabe, daß im durchschnittlichen Organopolysiloxanmolekül jeweils mindestens ein Rest $R^2$ die Bedeutung b) und die Bedeutung c) hat.

**3.** Verwendung nach Anspruch 2, dadurch gekennzeichnet, daß in der Formel $R^1$ Methylreste bedeutet, a einen Wert von 5 bis 200 und b einen Wert von 0 bis 2 hat.

## Claims

**1.** Use of curable organopolysiloxanes containing epoxy groups and additionally containing at least one group of the general formula

$$[-O-((C_nH_{2n}O-)_x)_y]_zR^3-O-((C_nH_{2n}O-)_x)_yH$$

where

$R^3$ is a divalent alkylene radical having 2 to 11 carbon atoms,

Z is 0 or 1,

y is 0 or 1,

z+y is 1 or 2,

n in the average molecule has an average value of from 2 to 3, the absolute values of n being 2, 3 or 4, and

x has a value of from 1 to 200,

bonded to an Si atom of the polysiloxane, alone or mixed with curable compounds containing epoxy groups, in particular organopolysiloxanes containing epoxy groups, but which do not contain the abovementioned group, as curable coating materials having abhesive properties.

**2.** Use according to Claim 1, characterized in that the oxyalkylene-modified, epoxy group-containing organopolysiloxane conforms to the general average formula

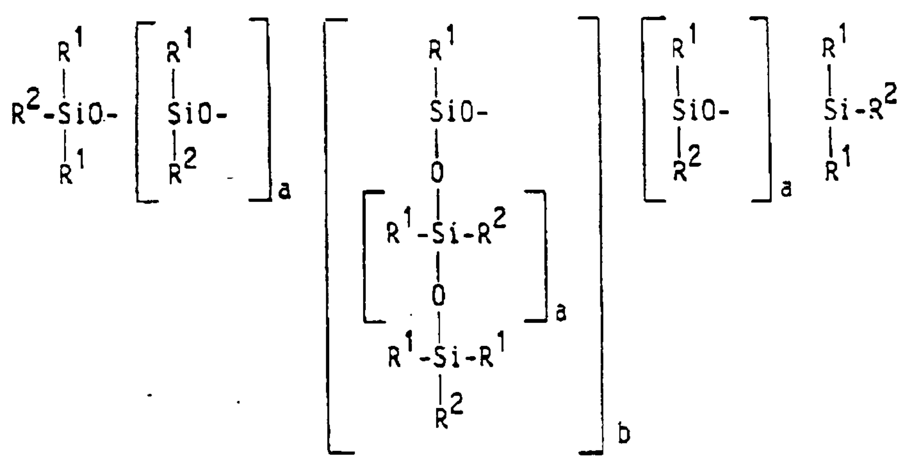

where

$R^1$ is identical or different in the molecule and is alkyl radicals having 1 to 4 carbon atoms, but at least 90% of the radicals $R^1$ are methyl radicals,

$R^2$ has the following meaning:

a) alkyl radicals having 1 to 20 carbon atoms, aryl or aralkyl radicals,

b) epoxy radicals linked to Si atoms of the polysiloxane via Si-C bonds,

c) radicals of the general formula

$$[-O-((C_nH_{2n}O-)_x)_y]_zR^3-O-((C_nH_{2n}O-)_x)_yH$$

where

$R^3$ is a divalent alkylene radical having 2 to 11 carbon atoms,

Z is 0 or 1,

y is 0 or 1,

z+y is 1 or 2,

n in the average molecule has an average value of from 2 to 3, the absolute values of n being 2, 3 or 4, and

x has a value of from 1 to 200,

a has a value of from 1 to 1,000, and

b has a value of from 0 to 10,

with the proviso that at least one radical $R^2$ in the average organopolysiloxane molecule has the meaning b) and at least one has the meaning c).

3. Use according to Claim 2, characterized in that, in the formula, $R^1$ denotes methyl radicals, a has a value of from 5 to 200, and b has a value of from 0 to 2.

## Revendications

1. Utilisation de polyorganosiloxanes durcissables comportant des groupes époxy, qui comportent en plus au moins un groupe, lié à un atome de Si du polysiloxane, de formule générale

$$[-O-((C_nH_{2n}O-)_x)_y]_zR^3-O-((C_nH_{2n}O-)_x)_yH$$

dans laquelle

$R^3$ est un radical alkylène divalent ayant de 2 à 11 atomes de carbone,

z vaut 0 ou 1,

y vaut 0 ou 1,

z+y vaut 1 ou 2,

n a, dans la molécule moyenne, une valeur moyenne de 2 à 3, la valeur absolue de n valant 2, 3 ou 4, et

x vaut de 1 à 200,

seuls ou en mélange avec des composés durcissables comportant des groupes époxy, notamment de polyorganosiloxanes contenant des groupes époxy, qui cependant sont exempts du groupe mentionné ci-dessus, comme agent de revêtement durcissable à propriétés anti-adhésives.

2. Utilisation selon la revendication 1, caractérisée en ce que le polyorganosiloxane comportant des groupes époxy modifiés par des radicaux alkylène, a la formule générale moyenne suivante :

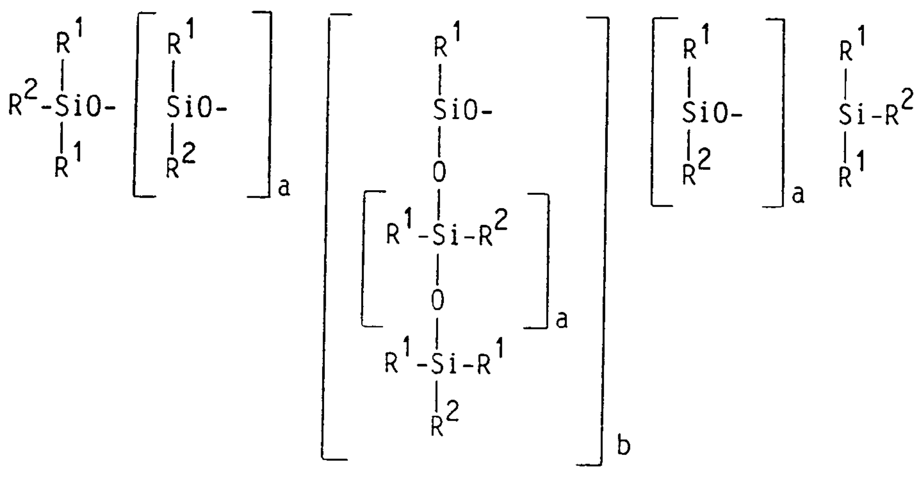

dans laquelle

les radicaux $R^1$, dans la molécule, sont identiques ou différents et représentent chacun un radical alkyle ayant de 1 à 4 atomes de carbone, mais au moins 90 % des radicaux $R^1$ étant des radicaux méthyle,

les radicaux $R^2$ ont les significations suivantes :

a) des radicaux alkyle ayant de 1 à 20 atomes de carbone, ou des radicaux aryle ou aralkyle ;

b) des radicaux époxy, qui sont reliés aux atomes de Si du polysiloxane par des liaisons Si-C ;

c) des radicaux de formule générale

$$[-O-((C_nH_{2n}O-)_x)_y]_zR^3-O-((C_nH_{2n}O-)_x)_yH$$

dans laquelle

$R^3$ est un radical alkylène divalent ayant de 2 à 11 atomes de carbone,
z vaut 0 ou 1,
y vaut 0 ou 1,
z+y vaut 1 ou 2,
n a, dans la molécule moyenne, une valeur moyenne de 2 à 3, la valeur absolue de n valant 2, 3 ou 4, et
x vaut de 1 à 200,
a vaut là 1000, et
b vaut 0 à 10,
du moment que, dans la molécule moyenne de polyorganosiloxane, au moins l'un des radicaux $R^2$ a la signification b), et au moins un radical $R^2$ a la signification c).

**3.** Utilisation selon la revendication 2, caractérisée en ce que, dans la formule, $R^1$ désigne des radicaux méthyle, a vaut de 5 à 200 et b vaut de 0 à 2.